Europäisches Patentamt

European Patent Office

Office européen des brevets

(11) Veröffentlichungsnummer : **0 225 492**
**B1**

(12) EUROPÄISCHE PATENTSCHRIFT

(45) Veröffentlichungstag der Patentschrift :
11.10.89

(21) Anmeldenummer : 86115511.7

(22) Anmeldetag : 08.11.86

(51) Int. Cl.⁴ : **B 60 R 25/04**, B 60 R 25/10

(54) Alarmanlage für Kraftfahrzeuge.

(30) Priorität : 05.12.85 DE 3543018

(43) Veröffentlichungstag der Anmeldung :
16.06.87 Patentblatt 87/25

(45) Bekanntmachung des Hinweises auf die Patenterteilung : 11.10.89 Patentblatt 89/41

(84) Benannte Vertragsstaaten :
BE DE ES FR GB IT NL SE

(56) Entgegenhaltungen :
FR-A- 2 286 031
GB-A- 2 157 870
US-A- 4 180 796
US-A- 4 296 402
US-A- 4 301 441
ELEKTOR, Band 4, Nr. 4, April 1978, Seite 26, Canterbury, GB; W. BRAUN "Car rip-off protection"

(73) Patentinhaber : ROBERT BOSCH GMBH
Postfach 50
D-7000 Stuttgart 1 (DE)

(72) Erfinder : Hofer, Walter, Dr.-Ing.
Kittler Strasse 1
D-8540 Schwabach (DE)

## Beschreibung

### Stand der Technik

Die Erfindung geht aus von einer Alarmanlage für Kraftfahrzeuge nach der Gattung des Hauptanspruchs. Bei einer derartigen bekannten Alarmanlage (Kraftfahrtechnisches Taschenbuch — Bosch, 19. Aufl. VDI-Verlag, Seite 586 ff) wird bei Auslösung eines Alarms gleichzeitig über eine Halteschaltung ein Relais erregt, mit dem der Startvorgang des Fahrzeugmotors blockiert wird. In bekannter Weise wird dabei an der Ausgangsklemme dieses Relais die Erregerwicklung eines weiteren Relais angeschlossen, dessen Ruhekontakt im Anlaßstromkreis oder im Primärstromkreis einer Zündanlage hinter dem Fahrschalter des Fahrzeugs liegt. Bei Alarmauslösung wird dieses Relais erregt, sein Ruhekontakt wird dadurch geöffnet und das Anlassen bzw. Zünden des Fahrzeugmotors wird auf diese Weise blockiert.

Nachteilig bei derartigen Lösungen ist jedoch, daß durch den geringen Kontaktdruck des Öffnerkontaktes die Funktionssicherheit von Starter und Zündung durch Kontaktabbrand und Verschmutzung in unerwünschter Weise beeinträchtigt wird. Außerdem bleibt bei einer Alarmauslösung das Blockierrelais solange eingeschaltet, bis die Alarmanlage entschärft wird. Da der Alarm nur über eine Zeit von 30 Sekunden gegeben werden darf, das Blockierrelais jedoch danach noch eingeschaltet bleibt, ist es möglich, daß die Fahrzeugbatterie durch diesen Stromverbraucher völlig entladen wird.

Mit der vorliegenden Lösung wird angestrebt, die Ruhestromaufnahme der Alarmanlage so gering zu halten, daß die Fahrzeugbatterie vor und nach einem Alarm nahezu nicht belastet ist.

### Vorteile der Erfindung

Die erfindungsgemäße Alarmanlage mit den kennzeichnenden Merkmalen des Hauptanspruchs hat den Vorteil, daß beim Scharfschalten bzw. Aktivieren der Überwachungsschaltung der Stromverbrauch an der Verriegelungs- bzw. Blockierschaltung der Alarmanlage vor, während und nach einem Alarm vernachlässigbar klein ist. Als weiterer Vorteil ist anzusehen, daß durch die neue Blockierschaltung bei scharfgeschalteter Überwachungsschaltung der Stromverbrauch nur während des unerlaubten Einschaltens des Fahrschalters geringfügig erhöht wird. Eine Belastung der Fahrzeugbatterie tritt daher bei Alarmauslösung nur während der Alarmdauer von 30 Sekunden auf.

Durch die in den Unteransprüchen aufgeführten Maßnahmen sind vorteilhafte Weiterbildungen und Verbesserungen der im Hauptanspruch angegebenen Merkmale möglich. Dabei ist es für die Funktionssicherheit der Blockierschaltung besonders zweckmäßig, den Steuereingang des elektronischen Schaltelementes für das Blockierrelais mit dem zur Überwachungsschaltung führenden Anschluß des scharfschaltenden Schalters zu verbinden, um damit die Funktionssicherheit zu erhöhen. Eine besonders zuverlässige Blockierschaltung bekommt man, wenn das elektronische Schaltelement als NPN-Transistor ausgebildet ist, dessen Emitter gegen Masse geschaltet ist. Außerdem ist es besonders vorteilhaft, wenn vom Blockierrelais Arbeitskontakte in der Versorgungsleitung der Zündanlage und/oder in der Anlaßleitung angeordnet werden. Da das Relais nur bei geschlossenem Fahrschalter und entschärfter Überwachungsschaltung erregt wird, wird durch die Verwendung der Arbeitskontakte der Kontaktdruck erhöht. Auch bei häufigem Schalten erhält man an den Arbeitskontakten einen geringen Kontakt-Spannungsabfall, da die Kontakte sich von Staub und Korrosionsrückständen freibrennen.

### Zeichnung

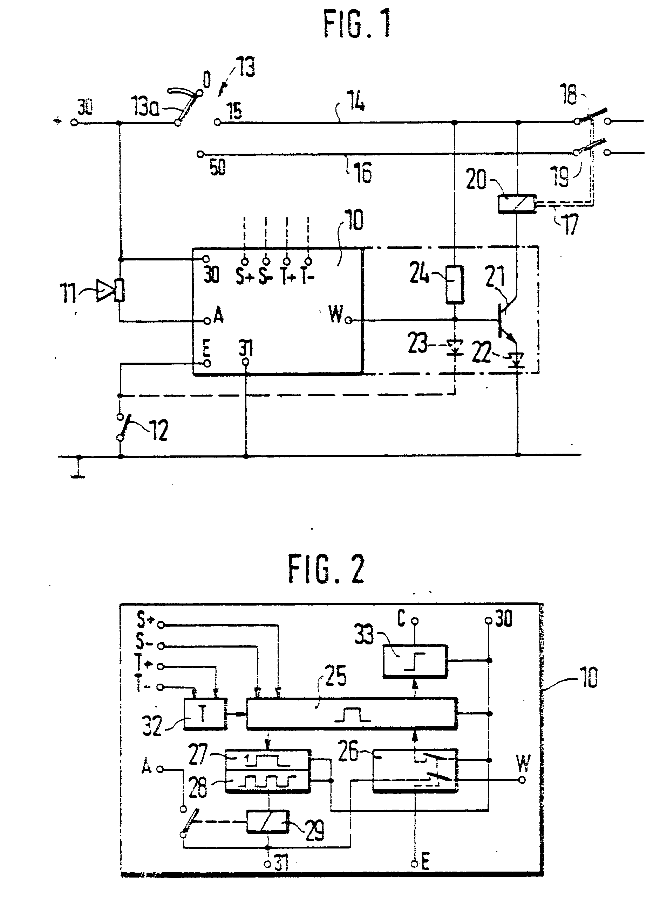

Ein Ausführungsbeispiel der Erfindung ist in der Zeichnung dargestellt und in der nachfolgenden Beschreibung näher erläutert. Es zeigen Figur 1 die erfindungsgemäße Alarmanlage mit einer Überwachungs- und Verriegelungsschaltung und Figur 2 zeigt das Blockschaltbild der Überwachungsschaltung aus Figur 1.

### Beschreibung des Ausführungsbeispiels

Die in Figur 1 dargestellte Alarmanlage für ein Kraftfahrzeug gegen Diebstahl und Einbruch ist mit einer in Figur 2 aufgegliederten Überwachungsschaltung 10 versehen, die mit einer Plus-Klemme 30 mit einen Anschluß einer nicht dargestellten Fahrzeugbatterie verbunden ist. Über eine Masse-Klemme 31 ist die Überwachungsschaltung 10 gemeinsam mit dem Minus-Pol der Fahrzeugbatterie auf Masse gelegt. Über vier Eingänge S+, S—, T+ und T— werden in an sich bekannter Weise verschiedene, im einzelnen nicht dargestellte Schaltkreise im Fahrzeug zur Überwachung angeschlossen. Außerdem ist an einer Klemme A ein Signalhorn 11 für einen Alarm angeschlossen. An einer Klemme E ist schließlich ein handbetätigter Schalter 12 gegen Masse gelegt, der vorzugsweise als widerstandscodierter Schlüsselschalter ausgebildet ist und mit dem die Überwachungsschaltung 10 scharfgeschaltet werden kann. Ein Ausgang W ist bei scharfgeschalteter Überwachungsschaltung schaltungsintern gegen Massepotential geschaltet. Ein Fahrschalter 13 ist mit seinem beweglichen Schaltarm 13a an die Plus-Klemme 30 angeschlossen. Der Schaltarm 13a nimmt in seiner Ruhelage die dargestellte Position ein. Schwenkt man ihn auf seine Anschlußklemme 15, so wird die damit verbundene Versorgungsleitung 14 für die Zündanlage und für andere Verbraucher an Pluspotential gelegt. Schwenkt man den Schaltarm 13a bis zur Klemme 50, so wird ferner eine Anlaßleitung 16 auf Pluspotential gelegt.

Die Alarmanlage nach Figur 1 ist außerdem mit einer Blockierschaltung versehen, die ein Relais 17 aufweist, dessen Arbeitskontakte 18 und 19 im Beispielsfall in der Versorgungsleitung 14 bzw. in der Anlaßleitung 16 angeordnet sind. Das Relais 17 ist mit seiner Erregerwicklung 20 eingangsseitig mit der Versorgungsleitung 14 verbunden und somit hinter dem Fahrschalter 13 angeschlossen. Mit ihrem Ausgang ist die Erregerwicklung über die Schaltstrecke eines NPN-leitenden Transistors 21 auf Masse gelegt, wobei der Emitteranschluß des Transistors 21 mit Masse verbunden ist. Die Steuerstrecke des Transistors 21 ist mit dem Ausgang W der Überwachungsschaltung 10 verbunden. Schließlich ist die Basis des Transistors 21 noch über einen Widerstand 24 mit dem Eingang der Erregerwicklung 20 des Relais 17 verbunden. Der Transistor 21 bildet in dieser Blockierschaltung ein elektronisches Schaltelement mit seiner Basis als Steuereingang.

Figur 2 zeigt das Blockschaltbild der Überwachungsschaltung 10 mit einer Schaltstufe 25 zur Alarmauslösung. Die Schaltstufe 25 wird dann aktiviert, wenn eine Scharfschaltung 26 über Klemme E und den Schalter 12 (Figur 1) auf Massepotential gelegt wird. Durch Anlegen eines Plus-Potentials an der Klemme S+ oder Anlegen eines Minus-Potentials an der Klemme S— wird in der Schaltstufe 25 unverzüglich ein Alarmimpuls auf eine monostabile Kippstufe 27 gegeben, um einen 30 Sekunden-Alarm auszulösen. Über eine nachgeschaltete astabile Kippstufe 28 wird sodann ein Alarmrelais 29 intermittierend eingeschaltet und dadurch das an der Klemme A angeschlossene Signalhorn 11 (Figur 1) aktiviert. Beim Anlegen eines Plus-Potentials an der Klemme T+ bzw. eines Minus-Potentials an der Klemme T— wird die Auslösung eines Alarms durch eine Zeitstufe 32 um ca. 9 Sekunden verzögert. Dadurch ist es möglich, die Auslösung eines Alarms zu unterdrücken, wenn eine befugte Person nach dem Öffnen einer Fahrzeugtür innerhalb dieser Zeit den Schalter 12 öffnet und damit die Alarmanlage entschärft. Über eine Haltestufe 33, die ebenfalls durch den Alarmimpuls der Schaltstufe 25 einzuschalten ist, kann an Klemme C z. B. durch eine Kontrollampe festgestellt werden, ob während der Scharfschaltung der Überwachungsschaltung 10 ein Alarm ausgelöst wurde. Die einzelnen Schaltstufen der Überwachungseinrichtung 10 sind dabei über Klemme 30 ständig an Spannung gelegt.

Die Wirkungsweise der Alarmanlage mit der Verriegelungsschaltung soll nunmehr näher erläutert werden. Im Normalzustand ist der Schalter 12 geöffnet, so daß die Überwachungsschaltung 10 zwar mit Klemme 30 und 31 an die Versorgungsspannung angeschlossen ist, damit den Ausgang W potentialmäßig freischaltet, eine Alarmauslösung jedoch nicht ermöglicht. Wird in diesem Zustand der Fahrschalter 13 betätigt, so gelangt über die Versorgungsleitung 14 und den damit verbundenen Widerstand 24 Plus-Potential auf die Basis des Transistors 21 und dieser wird in den stromleitenden Zustand gesteuert. Es fließt nun über die Erregerwicklung 20 des Relais 17 sowie über den Transistor 21 ein Strom und das Relais 17 wird eingeschaltet. Die Arbeitskontakte 18 und 19 werden geschlossen, so daß sowohl die Zündanlage als auch der Anlasser funktionsbereit sind. Das Fahrzeug kann nun über Klemme 50 vom Fahrschalter 13 gestartet werden. Da bei laufendem Motor die Fahrzeugsbatterie ständig nachgeladen wird, ist der Stromverbrauch durch das Relais 17 bei diesem Betriebszustand ohne Bedeutung. Sobald nun der Motor durch Öffnen des Fahrschalters 13 wieder stillgesetzt wird, gelangt der Transistor 21 wieder in den Sperrzustand und das Relais 17 fällt ab. Versorgungsleitung 14 und Anschlußleitung 16 sind dann durch die Arbeitskontakte 18 und 19 des Relais 17 unterbrochen. Die Blockierschaltung hat folglich keinen Stromverbrauch.

Soll nun die Überwachungsschaltung 10 scharfgeschaltet werden, so wird der Schalter 12 geschlossen und damit der Ausgang W potentialmäßig mit Masse verbunden. Der Transistor 21 bleibt somit gesperrt und folglich sind auch die Arbeitskontakte 18 und 19 des Relais 17 geöffnet. An diesem Zustand des Relais 17 ändert sich auch dann nichts, wenn über die an verschiedene Schaltkreise im Fahrzeug angeschlossenen Eingänge des S+, S—, T+ und T— ein Alarm ausgelöst wird. Wird nun durch eine unbefugte Person bei scharfgeschalteter Überwachungseinrichtung 10 der Fahrschalter 13 betätigt, so fließt ein Strom über die Versorgungsleitung 14 und den Widerstand 24 über die Ausgangsklemme W gegen Masse, somit wird der über den Widerstand 24 fließende Steuerstrom vom Transistor 21 abgezogen, so daß dieser weiterhin gesperrt bleibt. Die Zündanlage sowie der Anlasser bleiben folglich durch die geöffneten Arbeitskontakte 18 und 19 des Relais 17 ausgeschaltet. Der Stromverbrauch über den Widerstand 24 ist dabei zu vernachlässigen, so daß der Fahrschalter 13 auch über lange Zeit ohne zusätzliche Belastung der Fahrzeugbatterie eingeschaltet bleiben kann.

Für die Wirksamkeit der Blockierschaltung ist es wichtig, daß der Schalter 12 zur Scharfschaltung und Entschärfung der Überwachungsschaltung 10 von unbefugten Personen nicht ohne weiteres zugänglich ist. Er wird daher bevorzugt als Schlüsselschalter an der Fahrzeug-Außenseite montiert. In diesem Fall kann in der Überwachungsschaltung 10 die Zeitstufe 32 entfallen und die Anschlüsse T+ und T— führen dann direkt zur Schaltstufe 25 zursofortigen Alarmauslösung. Anstelle eines handbetätigten Schalters 12 kann aber ebensogut ein elektronisches Schaltelement verwendet werden, das beispielsweise über eine bistabile Kippstufe von einem Tastschalter oder einem Impulsgeber abwechselnd ein- und ausgeschaltet wird. Die Kippstufe kann dabei ebenfalls von einem im Fahrzeug angeordneten Empfänger getriggert werden, welcher drahtlos durch einen Infrarotsender oder dgl. außerhalb des Fahrzeugs zu aktivieren ist.

Um während der Fahrt eine Unterbrechung der Zündung durch eine ungewollte Betätigung des Schalters 12 zu vermeiden, ist es vorteilhaft, nur einen Arbeitskontakt des Relais 17 zu verwenden, der dann in der Anlaßleitung 16 anzuordnen ist. In diesem Fall bleibt die Zündung auch bei abgefallenem Relais 17 eingeschaltet. Dabei ist es jedoch zweckmäßig, eine Zündanlage mit einer Ruhestromabschaltung zu verwenden, da sonst bei scharfgeschalteter Überwachungsschaltung 10 mit dem unerlaubten Schließen des Fahrschalters 13 über die Versorgungsleitung 14 die Zündspule aufgeheizt wird und die Fahrzeugbatterie entlädt.

Wie in Figur 1 durch eine strichpunktierte Erweiterung der Überwachungsschaltung 10 erkennbar ist, kann auch die Elektronik der Blockierschaltung in das Gehäuse der Überwachungsschaltung 10 mit enthalten sein. Außerdem kann eine eingangs aufgeführte bekannte Alarmanlage mit einer Überwachungsschaltung ohne Ausgang W erfindungsgemäß umgerüstet werden. In diesem Fall wird die Basis des Transistors 21 der Blockierschaltung — wie in Figur 1 gestrichelt dargestellt — mit der Klemme E der Überwachungsschaltung 10 verbunden. Um für diesen Fall zu verhindern, daß bei offenem Schalter 12 der Transistor 21 durch einen Steuerstrom leitend geschaltet wird, welcher bei geschlossenem Schalter 12 von Klemme E aus zur Masse fließt, ist in dieser Verbindung gemäß Figur 1 eine Sperrdiode 23 vorzusehen. Die damit verursachte Potentialanhebung an der Basis des Transistors 21 wird schließlich mit einer weiteren gestrichelt dargestellten Diode 22 am Emitter des Transistors 21 kompensiert.

Bei Anschluß der Blockierschaltung an Klemme W der Überwachungsschaltung 10 kann der Schalter 12 zur Scharfschaltung auch ein Schlüsselschalter sein der mit mehreren Widerständen örtlich zusammengefaßt ist und einen Teil dieser Widerstände zu überbrücken vermag. In diesem Fall kann z. B. von der Scharfschaltung jeweils durch Potentialmessung am Ausgang E festgestellt werden, ob der Schalter 12 geschlossen oder geöffnet bzw. der Schalter 12 samt Widerstände in unerlaubter Weise überbrückt oder unterbrochen wurde.

## Patentansprüche

1. Alarmanlage für Kraftfahrzeuge gegen Diebstahl und Einbruch mit einer Überwachungsschaltung (10), die von einem an ihr angeschlossenen Schalter (12) scharfgeschaltet wird, sodann über mehrere Eingänge (S+, S—, T+, T—) verschiedene Schaltkreise im Fahrzeug überwacht und bei deren Änderung einen Alarm auslöst, sowie mit einer Blockierschaltung, die mit einem Relais (17) bei scharfgeschalteter Überwachungsschaltung und bei einer Alarmauslösung den Anlasser, die Zündung und/oder andere wichtige Einrichtungen des Fahrzeugs bis zum Entschärfen der Überwachungsschaltung blockiert, dadurch gekennzeichnet, daß in der Blockierschaltung die Erregerwicklung (20) des Relais (17) mit ihrem Eingang hinter dem Fahrschalter (13) des Fahrzeugs angeschlossen und mit ihrem Ausgang über ein elektronisches Schaltelement (21) auf Masse zu schalten ist, wobei die Steuerstrecke des Schaltelementes (21) über einen Widerstand (24) mit dem Eingang der Erregerwicklung (20) sowie mit einem Anschluß (E, W) eines Schaltgliedes (26, 12) verbunden ist, der bei scharfgeschalteter Überwachungsschaltung (10) auf Masse geschaltet ist.

2. Alarmanlage nach Anspruch 1, dadurch gekennzeichnet, daß der Steuereingang des Schaltelementes (21) mit einem Anschluß (W) einer Scharfschaltungsstufe (26) der Überwachungsschaltung (10) verbunden ist.

3. Alarmanlage nach Anspruch 1, dadurch gekennzeichnet, daß der Steuereingang des Schaltelementes (21) mit dem zur Überwachungsschaltung (10) führenden Anschluß (E) des diese scharfschaltenden Schalters (12) verbunden ist.

4. Alarmanlage nach Anspruch 1, dadurch gekennzeichnet, daß das elektronische Schaltelement (21) ein NPN-leitender Transistor ist, dessen Emitter gegen Masse geschaltet ist.

5. Alarmanlage nach Anspruch 1, dadurch gekennzeichnet, daß Arbeitskontakte (18, 19) des Relais (17) in der Versorgungsleitung (14) der Zündanlage und/oder in der Anlaßleitung (16) angeordnet sind.

## Claims

1. Alarm device for motor vehicles against theft and break-ins having a monitoring circuit (10) which is energized by a switch (12) connected to it, whereupon various switching circuits in the vehicle it monitors via a plurality of inputs (S+, S—, T+, T—) and, in the event of their alteration, triggers an alarm, and having a disabling circuit which with a relay (17) disables the starter, the ignition and/or other important equipment of the vehicle when the monitoring circuit is energized and an alarm is triggered until the monitoring circuit is deenergized, characterized in that in the disabling circuit the input of the excitation coil (20) of the relay (17) is connected downstream of the controller (13) of the vehicle and its output can be connected to earth via an electronic switching element (21), the control section of the switching element (21) being connected via a resistor (24) to the input of the excitation coil (20) and with a terminal (E, W) of a switching device (26, 12) which, when the monitoring circuit (10) is energized, is connected to earth.

2. Alarm device according to Claim 1, characterized in that the control input of the switching element (21) is connected to a terminal (W) of an energizing stage (26) of the monitoring circuit (10).

3. Alarm device according to Claim 1, characterized in that the control input of the switching element (21) is connected to the terminal (E), leading to the monitoring circuit (10), of the switch (12) energizing said circuit.

4. Alarm device according to Claim 1, characterized in that the electronic switching element (21) is an n-p-n transistor whose emitter is connected to earth.

5. Alarm device according to Claim 1, characterized in that make contacts (18, 19) of the relay (17) are arranged in the supply line (14) of the ignition system and/or in the starting line (16).

**Revendications**

1. Dispositif d'alarme pour véhicule automobile, contre le vol et l'effraction comprenant un circuit de surveillance (10) amorcé par l'intermédiaire d'un interrupteur (12) lui étant raccordé, surveillant, par l'intermédiaire de plusieurs entrées (S+, S—, T+, T—), différents circuits d'interruption situés dans le véhicule, et déclenchant une alarme dans le cas où le circuit de surveillance est amorcé et dans le cas du déclenchement d'une alarme, jusqu'au désamorçage du circuit de surveillance, caractérisé en ce que, dans le circuit de blocage, l'enroulement d'excitation (20) du relais (17) est raccordé à son entrée derrière l'interrupteur de contact (13) du véhicule automobile et est à brancher à la masse par sa sortie, par l'intermédiaire d'un élément de circuit électronique (21), la partie de commande de l'élément de circuit (21) étant reliée par l'intermédiaire d'une résistance (24) à l'entrée de l'enroulement d'excitation (20), ainsi qu'à un raccordement (E, W) d'un organe d'interruption (26, 12) qui est branché à la masse lors de l'amorçage du circuit de surveillance (10).

2. Dispositif d'alarme selon la revendication 1, caractérisé en ce que l'entrée de commande de l'élément de circuit (21) est reliée à un raccordement (W) d'un étage de circuit d'amorçage (26) du circuit de surveillance (10).

3. Dispositif d'alarme selon la revendication 1, caractérisé en ce que l'entrée de commande de l'élément de circuit (21) est reliée au raccordement (E) menant au circuit de surveillance (10) de l'interrupteur (12) amorçant celui-ci.

4. Dispositif d'alarme selon la revendication 1, caractérisé en ce que l'élément de circuit électronique (21) est un transistor conducteur de type NPN dont l'émetteur est branché à la masse.

5. Dispositif d'alarme selon la revendication 1, caractérisé en ce que des contacts de travail (18, 19) du relais (17) sont disposés dans la ligne d'alimentation (1) de l'installation d'allumage et/ou dans la ligne de démarreur (16).

FIG. 1

FIG. 2